(19) Europäisches Patentamt / European Patent Office / Office européen des brevets

(11) **EP 3 182 531 B1**

(12) **EUROPEAN PATENT SPECIFICATION**

(45) Date of publication and mention
of the grant of the patent:
**22.04.2020 Bulletin 2020/17**

(21) Application number: **16202109.1**

(22) Date of filing: **05.12.2016**

(51) Int Cl.:
*H01S 3/00* *(2006.01)*        *H01S 3/23* *(2006.01)*
*G02F 1/37* *(2006.01)*

(54) **METHOD FOR GENERATION OF ULTRASHORT LIGHT PULSES**

VERFAHREN ZUR ERZEUGUNG VON ULTRAKURZEN LICHTPULSEN

PROCÉDÉ DE GÉNÉRATION D'IMPULSIONS LUMINEUSES ULTRACOURTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2015 LT 2015512**

(43) Date of publication of application:
**21.06.2017 Bulletin 2017/25**

(73) Proprietor: **UAB "EKSPLA"
02300 Vilnius (LT)**

(72) Inventors:
• **MICHAILOVAS, Andrejus
02300 Vilnius (LT)**
• **ZAUKEVICIUS, Audrius
02300 Vilnius (LT)**

(74) Representative: **Draugeliene, Virgina Adolfina
Tarpine Ltd
A. P. Kavoliuko g. 24-152
04328 Vilnius (LT)**

(56) References cited:
**US-A- 5 847 863        US-A1- 2013 182 724
US-B1- 7 733 922**

• **DIDENKO N V ET AL: "Femtosecond pulse
compression based on second harmonic
generation from a frequency chirped pulse",
OPTICS COMMUNICATIONS, NORTH-HOLLAND
PUBLISHING CO. AMSTERDAM, NL, vol. 282, no.
5, 1 March 2009 (2009-03-01) , pages 997-999,
XP025883176, ISSN: 0030-4018, DOI:
10.1016/J.OPTCOM.2008.11.010 [retrieved on
2008-11-24]**

## Description

Technical field to which invention relates

This invention relates to the laser field, particularly to methods and laser sources for generation of ultrashort light pulses. More specifically, this invention relates to laser sources for generation of multi-millijoule ultrashort pulses of visible light. This invention can be used in optical parametric chirped pulse amplification (OPCPA) systems that provide ultrahigh intensity light pulses required for world-leading scientific research, medicine and industry.

The optical parametric amplification is a way to obtain tunable laser radiation. Moreover, optical parametric amplification devices have several distinctive features that make them suitable for amplification of ultrashort light pulses. An effective amplification of extremely short, shorter than one picosecond, light pulses requires a technique known as the optical parametric chirped pulse amplification (OPCPA).

Indication of the background art

Active media doped with neodymium (Nd) ions feature high gain coefficient, are thermally and mechanically stable, may operate at high repetition rates and in high-power regime. Highest pulse energies from OPCPA systems are achieved when employing flashlamp-pumped solid-state Nd:YAG amplifiers, see for example, J.Adamonis et al., "High-energy Nd:YAG-amplification system for OPCPA pumping," Quantum Electronics 42, no. 7, p.567 (2012). A compromise between pulse energy and average power can be realised with diode-pumped solid-state amplifiers, such as Nd:YAG or Nd:YVO$_4$, see for example K.Michailovas et al., "Kilohertz rate picosecond pulses amplifier for pumping of OPCPA system, " in Lasers, Sources, and Related Photonic Devices, Paper AW4A3, OSA (2012). High gain of Nd-based amplifiers is achieved partly because of a narrow fluorescence bandwidth of neodymium ions, especially in the case of Nd:YAG. However, a narrow spectral band of the Nd:YAG amplifiers limits pulse duration to not less than 15ps. Typical pulse durations of high-gain - with amplification factors exceeding $10^6$ - Nd:YAG amplifiers span from 20ps to 100ps. A slightly broader fluorescence bandwidth of Nd:YVO$_4$ active medium ends up in output pulse durations of Nd:YVO$_4$ based amplifiers in the range from 5ps to 100 picoseconds.

Mostly, radiation in green spectral range with wavelengths from 515nm to 532nm, i.e. a frequency doubled radiation (second harmonic) of said high-gain laser amplifiers, is used for pumping OPCPA systems. Duration of double-frequency pulses is similar or shorter (but not more than by a factor of 1.41) than pulses of a fundamental wave. Therefore, pulses of frequency doubled radiation from Nd:YAG amplifiers typically spans from 15ps to 100ps. Similarly, frequency doubled radiation of

Nd:YVO$_4$ amplifiers have pulse durations in the range from 4ps to 100ps.

The relatively long pulse duration of Nd:YAG amplifiers is an important limiting factor when using these highly developed amplifiers in OPCPA systems as pump pulse sources. A ratio of pump and seed pulse durations is very important for parametric amplification efficiency, output spectral characteristics (i.e. signal central wavelength and spectral width) and ultrashort pulse contrast to parametric fluorescence background of OPCPA. Parametric amplification is reasonable only if durations of pump and seed pulses do not differ by more than 10 times. An optimum value of the pump-to-seed pulse duration ratio is somewhere between 1 and 2, depending on spatio-temporal characteristics of seed and pump pulses and their energy. In OPCPA systems with other high-gain pump pulse amplifiers, Nd:YVO$_4$ or even Yb-based, it is also important to get pump pulses as short as possible, especially after regenerative amplification.

Another aspect - pump pulse synchronisation with a seed pulse of the OPCPA. European patent applications no. EP14177007.3 (publication no. EP2827461) filed on 2014-07-15 and EP15159873.7 (publication no. EP2924500), filed on 2015-03-19, both filed by the applicant of the present invention, describe two variations of the OPCPA system comprising a single primary laser source, thus accomplishing a passive synchronisation between seed and pump pulses. Said primary laser source is based on a picosecond Yb-doped fiber oscillator, also comprises laser radiation conditioning elements for formation of radiations of seed and pump branches. Radiation of the pump brach, after traversing said radiation conditioning elements, is highly compatible with spectral characteristics of Nd-based amplifiers. A possibility to use the Nd-amplifier allows for achieving high energy of pump pulses. However, in said prior art solutions, generation of the frequency doubled radiation suitable for OPCPA pumping is done in a traditional way: at first, the amplified chirped pulse of fundamental frequency (first harmonic) is compressed in time, later, it propagates through a nonlinear crystal for second harmonic generation. As a result pump pulses are not shorter than 10ps.

Y.Wang et al., "Frequency-doubling pulse compressor for picosecond high-power neodymium laser pulses," Optics Letters 17, no. 20, p. 1459 (1992) and A.Umbrasas et al., "Generation of femtosecond pulses through second-harmonic compression of the output of a Nd:YAG laser," Optics Letters 20, no. 21, p. 2228 (1995) describe a method for generation of ultrashort light pulses, which comprises formation of two laser radiation beams with orthogonal polarisations ($e$ and $o$ waves), introduction of a certain predelay between said $e$ and $o$ waves and type II second harmonic generation in a quadratic nonlinear medium (SHG crystal). Also, special relationship between group velocities of fundamental and second-harmonic radiations must be fulfilled. Due to the difference between said group velocities and said controllable predelaying of two orthogonally polarised laser beams, generation of the second-harmonic laser beam with several times shorter pulse duration than duration of the first-harmonic pulse. However, practical realisation of said conditions is not a trivial task and the generated second-harmonic pulses of ultrashort duration are accompanied by a background radiation (pedestal) which has duration comparable with that of the first-harmonic pulse and contains a significant amount of energy.

Documents M.Aoyama et al., "Efficient noncollinear second-harmonic generation with proper frequency chirp and tilted pulse fronts of femtosecond laser pulses," Jap. J. Appl. Physics 39, no. Part 1, No. 5A, p. 2651 (2000) and O.Gobert et al., "Efficient broadband 400 nm noncollinear second-harmonic generation of chirped femtosecond laser pulses in BBO and LBO", Applied Optics 53, no. 12, p. 2646 (2014) present other methods for generation of ultrashort light pulses, comprising formation of frequency chirped and pulse-front-tilted pulses of first-harmonic radiation followed by a type I non-collinear second harmonic generation in a quadratic nonlinear medium. The known solutions concentrate pulse chirping (stretching) and pulse-front-tilting of femtosecond pulses in a controlable manner in order to avoid higher-order nonlinear phenomena and to attain second-harmonic pulse duration of as short as possible. A shorter duration of frequency doubled pulses is achieved without an additional optical element, i.e. pulses compressor, because self-compression occurs in said quadratic nonlinear medium only due to said controllable chirping, pulse-front tilting and an angle between non-collinear first-harmonic laser beams. A drawback of the known solutions lies in that accomplishment of said conditions is not an easy task. Further, they are not optimised for picosecond pulses. Finally, energy conversion efficiency from the first-harmonic radiation into the second-harmonic radiation does not exceed 70%.

US patent application no. US2013182724 (Imeshev et al.) describes a system for producing ultrashort tunable pulses based on ultra broadband OPA or OPG in nonlinear materials. The solution relates to laser source for producing ultrashort optical pulses utilizing amplification in optical fibers operating in the infrared region beyond about 1700 nm. Said ultra broadband nonlinear materials are quasi-phase matched materials (QPM), i.e. periodically poled nonlinear media, and the focus of the document is on selection of the QPM material, pump wavelengths, quasi-phase matching periods, and temperatures. In certain embodiments, chirped quasi-phase matched materials (CQPM), i.e. aperiodically poled nonlinear media, can be used in order to obtain the dispersion relations to achieve pulse compressions simultaneously. In certain embodiments, the OPA laser system utilizes an additional bulk compressor in the OPA pump source before or after the optional frequency doubler. The frequency doubler is also a QPM or CQPM material. The QPM or CQPM materials used for frequency conversion intrinsically ensure the parametric amplification or second harmonic generation in a broad spectral range. The additional bulk compressor is placed before the CQPM frequency doubler in those cases, when pulse energies exceeding about 200 nJ at about 2 $\mu$m wavelength from the Tm amplifier and pulse energies exceeding about 100 nJ at about 1 $\mu$m wavelength from the QPM frequency doubler are needed. Input pulses to the Tm amplifier are stretched to longer than about 5-20 ps to stay below the peak power limit of the amplifier. Compressing such long chirped pulses with a CQPM frequency doubler may be beyond the group delay limit available from a crystal of practical length. No evidence of bandwidth increase during second harmonic generation is indicated. Since the optical pulse laser source of the discussed solution deals with broadband active media of oscillators and amplifiers, such as Er- and Tm-doped fibers, increase of the bandwidth of radiation during frequency conversion is not important. However, the parametric amplification system neither its pump source cannot provide mJ output energies.

Russian Federation patent no. RU2393601 (filed by OOO "Avesta-Proekt", priority date: 2008-10-02) describes a method for generation of ultrashort light pulses in which second harmonic generation is performed from frequency chirped pulses of fundamental wave. The method comprises the following steps:

1) stretching pulses of an initial laser beam in order to form a first-harmonic laser beam of chirped laser pulses with pulse duration $\Delta t_{\text{chirped}}$;

2) delivering said first-harmonic laser beam of chirped laser pulses into a quadratic nonlinear medium, and thus forming a second-harmonic laser beam of chirped pulses;

3) compressing chirped pulses of the generated second-harmonic laser beam.

Duration $\Delta t_{2\omega}$, of the compressed pulses of the second-harmonic laser beam is directly proportional to a bandwidth-limited duration $\Delta t_{\text{BL}}$ of pulses of the first-harmonic laser beam incident to the quadratic nonlinear medium and inversely proportional to a ratio of spectral widths of the second-harmonic laser beam and the first-harmonic laser beam, $\Delta \omega_2$ and $\Delta \omega_1$ respectively, while this ratio depends on said durations $\Delta t_{\text{BL}}$ and $\Delta t_{\text{chirped}}$. When the second harmonic generation occurs in high-conversion regime (pump saturation regime), said ratio of spectral widths (in frequency units) can be written as follows:

$$\Delta \omega_2 / \Delta \omega_1 = \sqrt{4 - 3 \left( \Delta t_{\text{BL}} / \Delta t_{\text{chirped}} \right)^2} \ .$$

This means that the ratio $\Delta \omega_2 / \Delta \omega_1$ equal to 2 and twice shorter second-harmonic radiation pulses can be achieved in the ideal case: high-conversion regime and $\Delta t_{chirped} \gg \Delta t_{BL}$.

This method is also described and results are more explicitly presented in another publication of the same authors - N.V.Didenko et al., "Femtosecond pulse compression based on second harmonic generation from a frequency chirped pulse", Optics Communications, Vol. 282, pp. 997-999 (2009).

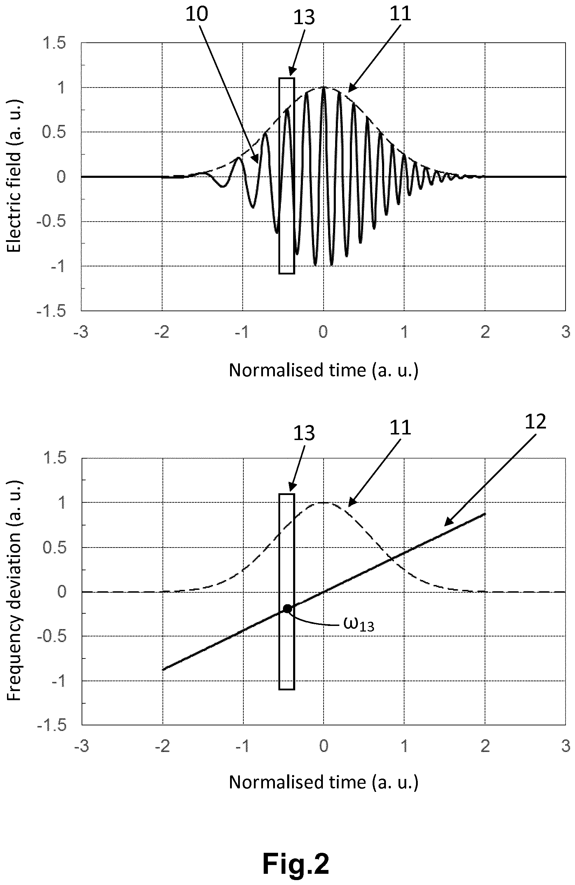

The solution of RU2393601 and *Didenko et al.* describes second harmonic generation from initially femtosecond pulses. Said relationship between spectral widths of the written formula is valid (and shortening of pulses of the second-harmonic laser beam occurs) only in the high-conversion regime. This means that pulses of said initial laser beam must be of high intensity, which is hard to achieve with femtosecond laser sources. Otherwise, when starting from laser source of moderate power, chirped pulses of the first-harmonic laser beam after stretching pulses of the initial laser beam have low instant intensities and said high-conversion regime in SHG medium is hardly achievable. From the measured spectrum of the second-harmonic radiation (see *Didenko et al.* Fig.2 b) - the ratio $\Delta\omega_2/\Delta\omega_1$ of spectral widths is far below the value of 2 - it is evident that the aforementioned high-conversion regime has not been achieved. A considerable pulse shortening in the publication of Didenko et al. and RU2393601 was achieved only because two SHG crystals were used: they were angle-tuned to generate second-harmonic radiation from a broadband initial radiation of Ti:sapphire laser at two neighbouring spectral regions giving a broad overall spectrum.

Yet another publication of the same research group (A.V. Konyashchenko et al., "16fs green pulses from two-stage nonlinear compression of 300fs ytterbium laser pulses", 15th International Conference on Laser Optics, LO-2012 (June 25-29, 2012, St. Petersburg, Russia), ThR5-p0) demonstrates pulse shortening of about 1.5 times due to second-harmonic generation from chirped femtosecond pulses of fundamental wave. This value of pulse shortening strongly correlates with low conversion efficiency. And this is an evidence that the high-conversion regime has not been achieved.

The main drawback of the known solution lies in that said high-conversion regime cannot be achieved by lengthening the SHG crystal because of dispersion for broadband radiation. As a result, for broadband (here, the term "broadband" means that the spectral width corresponds to femtosecond duration of transform-limited pulses) first-harmonic radiation it is impossible to attain high second harmonic generation efficiency, and simultaneously, the theoretical pulse shortening of 2 times, in a length of the known SHG crystals in which dispersion of group velocities is insignificant. The measured efficiency of energy convertion from the first-harmonic laser beam into the second-harmonic laser beam in RU2393601 and other related publications did not exceed 40% and energy of output pulses did not exceed a few tens of microjoules.

The closest prior art is US patent no. 7733922 (filed by Deep Photonics Corp; *Munroe et al.*). It describes a fiber laser system and method for generation of pulsed radiation of visible light, characterised by pulse duration of 10ps to 1ns and peak power from 1kW to 1MW. The system is based on fiber-based master oscillator-power amplifier (MOPA) and further comprises one or two pulse compression stages and a nonlinear frequency conversion stage (SHG crystal). The first compression stage is used to compress chirped pulses from the fiber MOPA in order to attain peak power of fundamental radiation that is enough to obtain second-harmonic generation efficiency higher than 50%. In a certain embodiment of the method, the pulse compression stage following the MOPA and producing an input to the SHG crystal does not need to compress pulses to their minimum temporal duration; therefore, second-harmonic radiation may be generated from frequency chirped pulses of first-harmonic radiation. In another certain embodiment of said method, the pulse compression stage following the MOPA and producing an input to the SHG crystal is even absent (because peak power of the MOPA is sufficiently high to ensure high (about 62%) second-harmonic generation efficiency). Again, SHG occurs from chirped pulses of fundamental wave. Pulses of second-harmonic radiation are compressed then on the second pulse compression stage. The compressed second-harmonic pulses are shorter than transform-limited pulses of first-harmonic radiation but the shortening is not greater than 1.25. The output energy of said laser system is within a range of a few microjoules.

Technical problem to be solved

The aim of the present invention is to provide a method for shortening laser pulses of frequency doubled radiation by not less than 1.7 times. Also it is the aim of the present invention to generate ultrashort light pulses of high energy (from 1mJ to hundreds of millijoules) with high efficiency.

Yet another aim of the present invention is to provide a laser source for generation of ultrashort light pulses for an efficient pumping of the optical parametric chirped pulse amplification (OPCPA) system. One of the main technical tasks that must be solved in the OPCPA systems - generation of high-energy and very short pump pulse simultaneously, and its synchronisation with a pulse of the seed branch.

Disclosure of the invention

This is achieved by the method for generation of ultrashort light pulses, and laser source thereof according to claims 1-11.

Advantages of the invention

The method and laser source of the present invention provides a new combination of known techniques - the chirped pulse amplification technique (CPA) and the second harmonic generation (SHG) from chirped pulses - which combines their features and advantages, also gives an additional effect. The CPA allows for avoidance of detrimental nonlinear pulse distortions or even destruction of optical components in the amplifier. Therefore, higher pulse energies are achieved. The second harmonic generation from chirped pulses allows for a broader spectral band of second-harmonic radiation to be generated, and therefore, for a shorter pulse duration to be achieved as compared to a case of second harmonic generation from unchirped pulses. Said broader spectrum is achieved in pump saturation regime, therefore, pulse shortening and high energy conversion efficiency are achieved simultaneously. Moreover, during second harmonic generation from chirped pulses, a probability of back-conversion is reduced. This is because, at a certain time instant of the strongly chirped pulse, there is a set of spectral components with nearly equal intensities and no other weak spectral components that could seed a parametrical back-conversion process.

The main benefit of the method of this invention, when comparing with the method described in the closest prior art, is higher efficiency. It is achieved by using radiation with a spectral width corresponding to picosecond duration of transform-limited pulses. Also, by inserting a quantum amplifier between the pulse stretcher and the SHG crystal, and by selecting its amplification factor so that, in combination with other optical parameters of steps being implemented in this method or with other optical parameters of components constituting the laser source, it ensures second harmonic generation efficiency not lower than 70%. Instant intensities in the chirped and amplified picosecond pulse (solution of the present invention) is higher than in the chirped unamplified femtosecond pulse (prior art) of fundamental wave. Therefore, efficient energy conversion from the first-harmonic wave into the second-harmonic wave occurs in a shorter length of SHG crystal in which group velocity dispersion does not play a significant role. High efficiency guarantees second harmonic generation in pump saturation regime - the regime when spectral broadening and pulse shortening is greater than in SHG -from unchirped pulses. At conditions when second harmonic generation efficiency not lower than 70% is ensured, the shortening of frequency doubled pulses is not less than 1.7 times.

The OPCPA system with reduced complexity and higher overall efficiency can be realised when utilising the laser source of the present invention as a pump pulse source. This is achieved not only because of higher efficiency in the stage of generation of frequency doubled laser pulses used as pump pulses in OPCPA. But also because of higher efficiency of parametric interaction in OPCPA stage since pump pulse has higher energy and is shorter. On the other hand, if higher efficiency of parametric interaction is not desired, higher intensity of the pump pulse allows for using a shorter optical parametric amplification crystal what in turn enlarges an acceptance bandwidth. Additionally, shorter pump pulse duration allows for an easier attainment of the optimal pump-to-seed pulse duration ratio at the parametric amplification stage, i.e. stretching of a seed pulse may be weak what in turn influences better compressibility of the resultant parametrically amplified pulse of the signal wave. Finally, shorter pump pulse leads to improved temporal contrast (shorter background pedestal) of the signal or idler pulses amplified in the OPCPA.

Brief description of the drawings

The invention is explained in greater detail in the following drawings, wherein:

Fig.1 - a functional block diagram describing a principle of a method of this invention;

Fig.2 - an illustration of electric field oscillations and variation of a carrier frequency in a chirped pulse;

Fig.3 - pulse intensity profile of the chirped pulse;

Fig.4 - comparison of the chirped pulse with an unchirped pulse;

Fig.5 - second harmonic generation according to this invention;

Fig.6 - explanatory diagram of the changes in frequency chirp of second-harmonic radiation generated according to this invention;

Fig.7, Fig.8, Fig.9 - examples of incorporation of a laser source of this invention into an OPCPA system;

Fig.10 - dependence of a ratio between bandwidths of the generated second-harmonic radiation and first-harmonic radiation as a function of selected system parameters.

Detailed description of the preferred embodiments

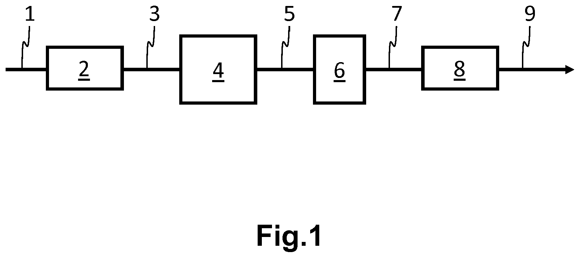

A principle of the method for generation of ultrashort light pulses according to this invention is illustrated in a block diagram of Fig.1. In an initial stage, a laser beam 1 with a central frequency $\omega_1$ (frequency of a first-harmonic radiation or fundamental frequency) and having a bandwidth of $\Delta\omega_{IN}$ is delivered into a pulse stretcher 2. Pulses of said initial laser beam 1 are unchirped (their carrier frequency is constant) or may have some chirp (i.e. time variation of carrier frequency). The pulse stretcher 2 adds different phase delays to various spectral components of radiation and thus stretches pulses in time. Initially unchirped or weakly chirped pulses, after traversing the pulse stretcher 2, become moderately or strongly chirped. This results in larger duration

$\Delta t_{\omega,chirped}$ of pulses in a first-harmonic laser beam 3 at the output of the stretcher 2 as compared to pulse duration $\Delta t_{IN}$ of pulses in the initial laser beam 1, or to its bandwidth-limited pulse duration $\Delta t_{\omega,BL1}$ (if pulse of said initial laser beam 1 are unchirped, $\Delta t_{IN}=\Delta t_{\omega,BL1}$).

Secondly, the first-harmonic laser beam 3 (of chirped pulses) propagates through a quantum amplifier 4, which comprises a single or a chain of laser amplifiers. Amplification of chirped laser pulses known as CPA technique is highly efficient and allows for higher energies to be achieved. Due to gain narrowing, characteristic to high-gain amplifiers, a spectral width $\Delta \omega_1$ of an amplified first-harmonic laser beam 5 may differ from a spectral width of the initial laser beam 1 or the laser beam 3 incident to the quantum amplifier 4. Therefore, a bandwidth limited pulse duration of the laser beam 5 hereinafter will be referred to as $\Delta t_{\omega,BL}$.

Thirdly, the amplified first-harmonic laser beam 5 of chirped pulses is delivered to a quadratic nonlinear medium 6 for second harmonic generation. Conditions for collinear or non-collinear phase matching must be satisfied. For a narrowband radiation, collinear geometry is preferable since is simpler. Second harmonic generation may be realised in any known nonlinear crystal such as BBO, LBO, $LiNbO_3$, KDP, KTP, etc. and their periodically poled equivalents. Laser pulses of the generated second-harmonic laser beam 7 are also chirped and the rate of their carrier frequency variation increases. A central wavelength of the second-harmonic radiation generated by the most oftenly used in laser technology high-gain active media falls within a visible spectral region. 532nm radiation may be generated from radiation of Nd:YAG or Nd:YVO$_4$ amplifiers. Other wavelengths of visible light may be obtained when utilising different Nd-doped active media in said quantum amplifier 4. Radiation in the visible spectral range is particularly suitable for pumping OPCPA systems based on broadband BBO nonlinear crystals.

In the next stage, chirped pulses of the generated second-harmonic laser beam 7 are compressed in a compressor 8. The compressor is an optical elements featuring dispersive properties, therefore, reduces or cancels phase delays among spectral components of chirped pulses and shortens duration. This way an output laser beam 9 of ultrashort light pulses is formed. Pulse duration $\Delta t_{2\omega}$ of ultrashort light pulses in said output laser beam 9 is shorter than the bandwidth-limited pulse duration $\Delta t_{\omega,BL}$ of the first-harmonic laser beam 5 that is incident to the quadratic nonlinear medium 6. Moreover, said pulse duration $\Delta t_{2\omega}$ of output ultrashort light pulses depends on a degree of stretching of the first-harmonic radiation pulses, namely on a ratio $\Delta t_{\omega,chirped}/\Delta t_{\omega,BL1}$. 532nm radiation with pulse duration smaller than 10ps and hundreds of millijoules in energy can be obtained in case Nd:YAG-based quantum amplifier 4 is used.

According to a particular embodiment of the present invention, the laser source utilises Nd:YAG based quantum amplifier 4, which comprises a single regenerative Nd:YAG amplifier or a chain of regenerative Nd:YAG (or Nd:YVO$_4$) amplifier and a single- or multi-pass Nd:YAG power amplifier. Therefore, a narrowband initial laser radiation (laser beam 1), a spectral width $\Delta \omega_{IN}$ of which may not exceed 1nm, is suitable for the aims of this invention. In a spectral region around 1064nm a spectral width of 1nm corresponds to a bandwidth-limited pulse duration $\Delta t_{\omega,BL1}$ equal to a few picoseconds.

Pulses of the initial narrowband laser beam 1 can be stretched by a pulse stretcher described in publications M.Y.Shverdin et al., "Chirped-pulse amplification with narrowband pulses," Opt. Lett. 35, p. 2478 (2010) and US8068522 (Barty et al.). Also, in an alternative embodiment, initial laser beam may have some initial chirp. Pulse pre-chirping may be performed directly in a seed source as is presented in our previous European patent application EP2827461 which describes a laser source comprising a fiber-based master generator providing two optically synchronised dual-wavelength ultrashort light pulses, wherein a pump-arm pulse is compatible with Nd-doped active media and is linearly chirped.

Fig.2 illustrates oscillations of an electric field 10 in a chirped pulse: a carrier frequency is variable and depends on a temporal position under a Gaussian-like pulse electric-field envelope 11. Moreover, in this case, time-dependent carrier frequency variation (chirp) is linear - the carrier frequency is growing constantly, and a carrier frequency deviation 12 dependence with time is a line. In the center of a narrow time window 13, a carrier frequency is equal to $\omega_{13}$.

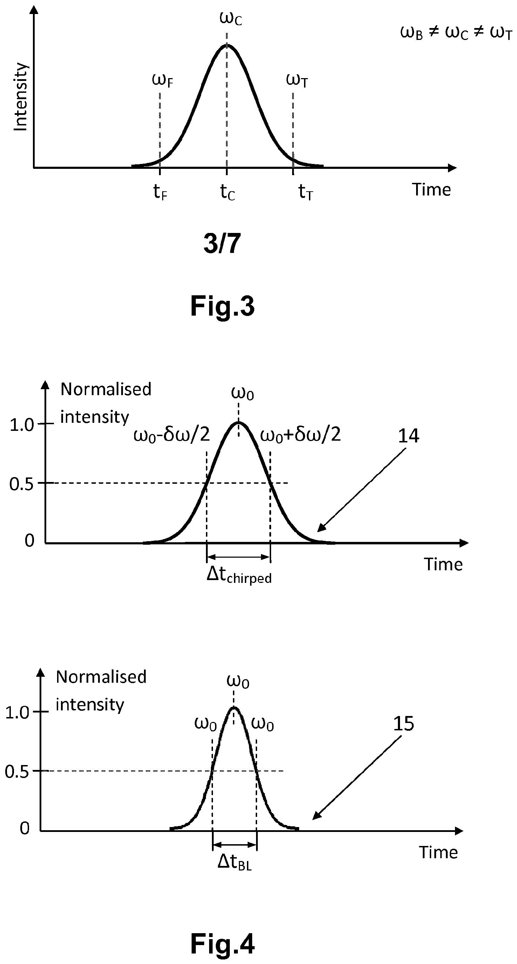

Pulse intensity profile remains Gaussian (curve of Fig.3 and curve 14 of Fig.4) and a carrier frequency $\omega_F$ at the front of the pulse is different from a carrier frequency $\omega_C$ (or $\omega_0$) at the center of the pulse, and from that ($\omega_T$) at the tail of the pulse. In the case of an up-chirped pulse (shown in Fig.2), $\omega_F < \omega_C < \omega_T$. Said variation of the carrier frequency is created by introducing phase shifts among spectral components of radiation. The chirped pulse 14 (Fig.4) is longer than an unchirped pulse 15, having the same spectral width. The bandwidth limited pulse 15 has the shortest possible pulse duration $\Delta t_{BL}$ allowed by its spectral width $\Delta \omega$, while the chirped pulse 14 is always longer and has pulse duration $\Delta t_{chirped}$.

In order to attain the aims and said advantages of this invention, pulses of fundamental frequency (first-harmonic radiation) must be highly stretched. According to a preferable realisation of the method of this invention, a stretching factor - that is a ratio between a pulse duration $\Delta t_{\omega,chirped}$ of chirped pulses in said first-harmonic laser beam 3 (see Fig.1) of chirped pulses and its bandwidth limited pulse duration $\Delta t_{\omega,BL1}$ - of at least 10 is preferable.

Generally, second harmonic generation (SHG) may occur in two regimes: low-conversion (unsaturated) regime and high-conversion (saturated) regime. In the unsaturated regime, intensity of a pulse of a second-harmonic radiation is proportional to a squared intensity of a pulse of the fundamental wave. Therefore, pulse duration of the frequency doubled laser beam is shorter than duration of pulses in the fundamental beam by a factor of $2^{0.5}$ (in case group velocity dispersion in the SHG crystal is negligible). However, only low conversion efficiency can be achieved. In the saturated regime, large conversion occurs and a pulse of a second-harmonic radiation replicates a shape of the first-harmonic pulse. As a result, pulse duration of the second-harmonic pulse approaches duration of the first-harmonic pulse, and there is no payoff in pulse duration (if shorter pulse is desirable). Further, if pump depletion or back-conversion (energy conversion back to fundamental frequency) are significant, variations in pulse shape and duration may occur.

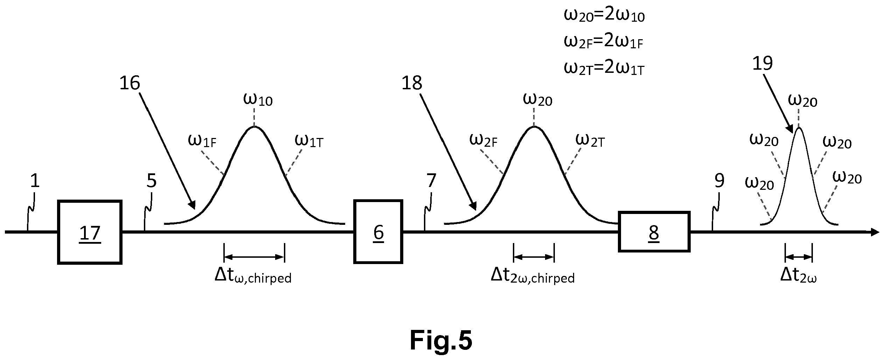

Fig.5 illustrates the second harmonic generation by the method of this invention. The second-harmonic laser beam 7 is generated from the first-harmonic laser beam 5 of chirped and amplified pulses 16. Said laser beam 5 is produced as described earlier (in the description of Fig.1), where a system component 17 comprises the pulse stretcher (2 in Fig.1) and the quantum amplifier (4 in Fig.1) in order to form said laser beam 5 of chirped pulses and amplified pulses from the initial laser beam 1. Since the pulse 16 of the amplified first-harmonic laser beam 5 is chirped, there is variation of the carrier frequency across the pulse envelope, $\omega_{1F} \neq \omega_{10} \neq \omega_{1T}$. During the second harmonic generation in the nonlinear crystal 6, radiation with a doubled frequency at every time instant is created. A chirped pulse 18 of the second-harmonic laser beam 7 is generated. Here, the high-conversion regime is realised in order to attain highest possible intensities of the second-harmonic radiation. Therefore, pulse duration $\Delta t_{2\omega,\text{chirped}}$ of the chirped pulse 18 of the second-harmonic laser beam 7 is similar to pulse duration $\Delta t_{\omega,\text{chirped}}$ of the chirped pulse 16 of the first-harmonic laser beam 5. The most important thing is that spectral width $\Delta\omega_2$ of the second-harmonic laser beam 7 is nearly doubled as compared to the spectral width $\Delta\omega_1$ of the first-harmonic laser beam 5 if said stretching factor $\Delta t_{\omega,\text{chirped}}/\Delta t_{\omega,\text{BL1}}$ of at least 10 is ensured. A linear carrier frequency modulation rate, i.e. chirp parameter in time domain, is also affected. Said chirp parameter of the pulse 18 is larger than the chirp parameter of the pulse 16. In the high-conversion regime said chirp parameter is doubled.

Finally, the pulse compressor 8 is positioned in the optical chain in order to reduce pulse duration of the generated second-harmonic radiation. An output laser beam 9 of ultrashort light pulses 19 is formed. In an ideal case, when dephasing of spectral components is completely canceled during compression, the pulse 19 is bandwidth-limited, and, hence, is shorter than a bandwidth-limited pulse duration of the initial laser beam 1 by up to 2 times. Therefore, there is a payoff in pulse duration of 1.41 times if compared to the low-conversion case and 2 times if compared to the high-conversion case of SHG. In some cases, there may be deviations in shapes of pulses 18 and 19 from those exemplarily shown in Fig.5, if group velocity dispersion in the crystal 6 cannot be ignored and if a double-frequency wave is generated not identically for all spectral components. Careful selection of a length of the crystal 6 and other system parameters minimizes the influence of the group velocity dispersion.

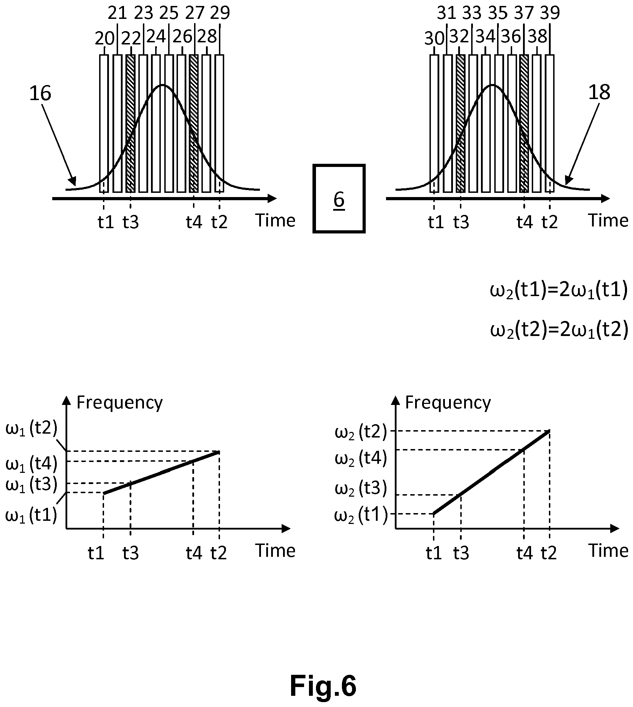

Fig.6 gives a more explicit understanding what happens in the second harmonic generation of chirped pulses according to this invention. Herein, the chirped pulse 16 of the first-harmonic radiation is divided into multiple slices 20-29. Electromagnetic field at various slices oscillates at different frequencies spanning from $\omega_1(t1)$ to $\omega_1(t2)$. Each of said slices 20-29 constituting the pulse 16 of the first-harmonic radiation generates its own double-frequency wave inside the nonlinear crystal 6. Therefore, a series of corresponding slices 30-39, characterised by frequencies from $\omega_2(t1)$ to $\omega_2(t2)$, correspondingly, forms the pulse 18 of the second-harmonic radiation. The pulse 18 is chirped, while a rate of change of instantaneous frequency is larger than in the pulse 16. If a high-conversion regime takes place, duration of the pulse 18 approaches the duration of the pulse 16, i.e. $\Delta t_{2\omega,\text{chirped}} = \Delta t_{\omega,\text{chirped}} = t4 - t3$. The rate of change of instantaneous frequency in the pulse 18 is doubled as compared to the rate of change of instantaneous frequency in the pulse 16 (the frequency scale in Fig.6 is preserved), since the following relationships are valid:

$$\omega_2(t2) - \omega_2(t1) = 2 \cdot [\omega_1(t2) - \omega_1(t1)] \, ,$$

$$\omega_2(t4) - \omega_2(t3) = 2 \cdot [\omega_1(t4) - \omega_1(t3)] \, .$$

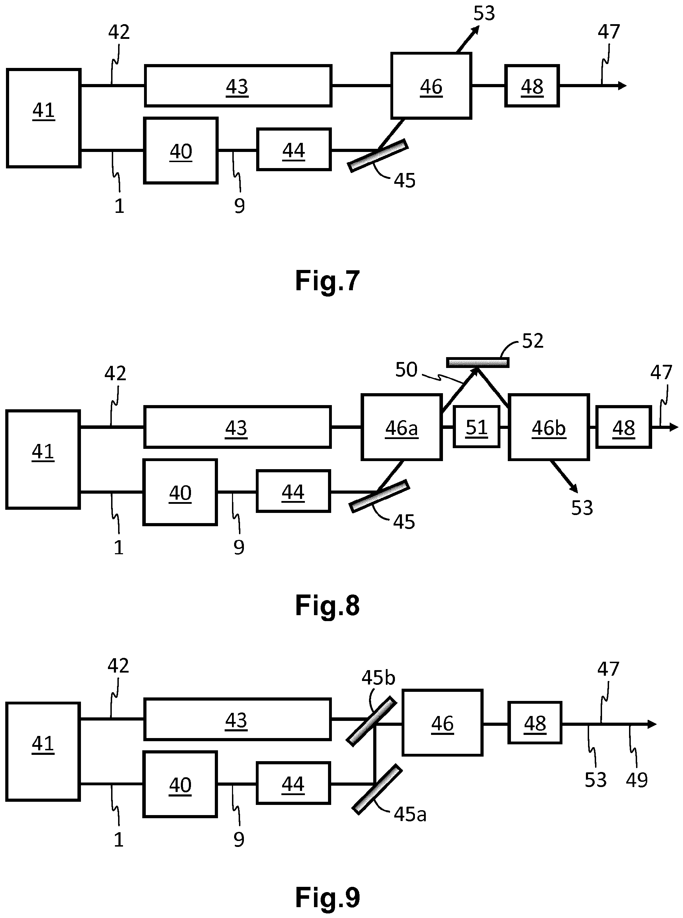

Figs.7-9 give examples of incorporation of the laser source according to this invention into an optical parametric chirped pulse amplification (OPCPA) system. An element 40 represents a laser source generating radiation 9 of ultrashort light pulses which is implemented according to the method illustrated in Fig.1 and is suitable for pumping the OPCPA. An element 41 is a source of the initial laser beam 1. The source 41 also provides radiation 42 for a seed branch of the OPCPA. Elements 43 and 44 represent conditioning systems for additional formation of seed and pump radiations, respectively, which are delivered (through additional optics 45, 45a, 45b) into the nonlinear crystal 46 or crystals 46a, 46b of optical parametric amplifier. A non-collinear phase-matching (as in Fig.7, Fig.8) in most cases is preferable in order to amplify a broad spectral band of seed radiation and to form ultrashort pulse duration of the amplified signal wave 47 (an element 48 is a compressor). While a collinear configuration (Fig.9) is attractive for giving a possibility to have an idler wave 49 without a spatial chirp. Fig.8 represents a time-share technique wherein a residual pump radiation 50 (in case the pump pulse is still several times longer than the seed pulse) is reused in a consequent optical parametric amplification stage (51 is a delay line; 52 - delivering optics for the pump beam 50 being reused; 53 - residual of the pump to be dumped). Other OPCPA implementation schemes are also possible.

To summarise, the method and laser source allows for generation of ultrashort light pulses, and, simultaneously, allows for high pulse energies to be achieved. Since chirped pulses of first-harmonic radiation (laser beam 3) are amplified in the quantum amplifier 4, chirped pulses of amplified first-harmonic radiation (laser beam 5) have high instant intensities. This ensures high-conversion regime during second harmonic generation and, therefore, efficient first-harmonic radiation conversion into the second-harmonic radiation. Quantum amplifiers based on neodymium-doped active media feature amplification factor exceeding $10^6$ and ensure strong amplification of chirped first-harmonic pulses. Consequently, strong-field interaction regime of second harmonic generation may be easily ensured due to high instant intensities of first-harmonic pulses (and with a proper selection of focusing parameters). As a result, 70% or more of the first-harmonic radiation may be converted into the second harmonic in the length of the SHG crystal 6 in which group velocity dispersion is insignificant. The method of this invention may also be embodied in a laser source comprising a quantum amplifier 4 featuring an amplification factor lower than $10^6$: tighter focusing of the laser beam 5 inside the SHG crystal 6 also ensures second harmonic generation efficiency not lower than 70%. On the other hand, if focusing conditions are not optimal and high-conversion regime of SHG is not ensured, SHG will end up in lower efficiency and pulse shortening of the compressed second-harmonic pulses will not be so strong. It is evident that the second harmonic generation efficiency is not only a result that influences energy of final pulses, but also is a measure of proper/unproper system parameters.

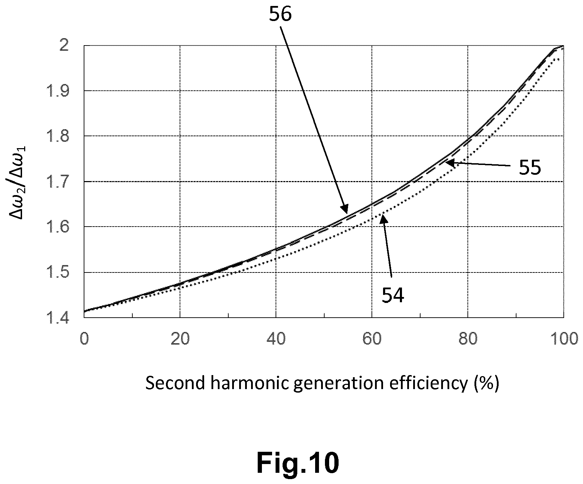

Fig.10 depicts a modelled dependence of the $\Delta\omega2/\Delta\omega1$ ratio as a function of system parameters expressed by the SHG efficiency that would be achieved. A case of Gaussian-shaped first-harmonic pulses is selected. Herein, $\Delta\omega2$ - a bandwidth of the generated second-harmonic laser beam 7, $\Delta\omega2$ - a bandwidth of the amplified first-harmonic laser beam 5, incident to the SHG crystal 6. Three curves 54, 55 and 56 represent stretching ratio values $\Delta t\omega$,chirped /$\Delta t\omega$,BL1 equal to 5, 10 and 20, respectively. The shortest possible value of ultrashort light pulses 19 in the output laser beam 9 may be expressed by the following formula:

$$\Delta t_{2\omega,\mathrm{BL}} = \frac{\Delta t_{\omega,\mathrm{BL}}}{\Delta\omega_2/\Delta\omega_1} \ ,$$

where $\Delta t_{\omega,\mathrm{BL}}$ is a bandwidth-limited duration of the first-harmonic radiation, incident to the SHG crystal 6. Therefore, said dependence of the ratio $\Delta\omega2/\Delta\omega1$ of spectral widths on SHG efficiency also reveals pulse shortening $\Delta t_{2\omega,\mathrm{BL}}/\Delta t_{\omega,\mathrm{BL}}$ that may be expected with certain system parameters. If the ratio $\Delta\omega2/\Delta\omega1$ is equal to 2, it is possible to have pulses of the second-harmonic radiation at the output of the laser source of this invention twice shorter than a bandwidth-limited pulse duration of the first-harmonic radiation incident to the SHG crystal. As it is seen from modelling results in Fig.10, pulse shortening by 2 times is possible only at high SHG efficiency values and with the stretching ratio value not less than 10. A selection of system parameters - energy of initial pulses, stretching ratio, amplification factor of the quantum amplifier 4, tightness of focussing inside the SHG crystal 6 and crystal length - influences SHG efficiency that is achieved, what in turn determines a level of spectral broadening and pulse shortening of the second-harmonic radiation. In a region of low SHG efficiencies, lower than 50%, the ratio $\Delta\omega2/\Delta\omega1$ of spectral widths does not exceed 1.6; the same duration shortening of the second-harmonic pulses 19 (with respect to first-harmonic pulses) may be expected. In a region of SHG efficiencies higher than 50%, it is possible to have ratios $\Delta\omega2/\Delta\omega1$ and $\Delta t_{2\omega,\mathrm{BL}}/\Delta t_{\omega,\mathrm{BL}}$ in the interval form 1.5 to 2. The theoretical dependencies of Fig.10 depicts second harmonic generation without counting beam diffraction and spatial walk-off. In cases when an influence of the diffraction and spatial walk-off can not be ignored, the dependencies may alter, however a general tendency remains - the higher the SHG efficiency, the shorter pulse duration at the output of the laser of this invention may be expected.

Therefore, high second harmonic generation efficiency that is achieved in the laser source of this invention is not only a beneficial effect for attaining high energy of ultrashort light pulses, but also is a criterion for selection of system parameter for pulse shortening up to 2 times to achieve.

Another aspect - theoretical curves of Fig.10 reveal an ideal second harmonic generation, when competing effects such as other second-order nonlinear phenomena and back-conversion do not occur. An advantage related to SHG according to this invention is that SHG from chirped pulses ensures that second-harmonic radiation is generated by various spectral components of fundamental frequency that are separated in time. This minimizes a probability of back-conversion. Thus, experimentally achievable SHG efficiencies are really high and are close to theoretical ones.

In the preferable realisation of this invention when stretching factor $\Delta t\omega$,chirped /$\Delta t\omega$,BL1 of the first-harmonic pulses is not less than 10 and if system optical parameters are selected to attain SHG efficiency exceeding 70%, duration $\Delta t_{2\omega,\mathrm{BL}}$ of the second-harmonic output pulses 19 after complete compression in pulse compressor 8 (see Fig.5 and Fig.1) is at least 1.7 times shorter than the bandwidth-limited duration $\Delta t_{\omega,\mathrm{BL}}$ of the first-harmonic radiation. By selecting system parameters to have SHG efficiency equal to 90%, ideally compressed second-harmonic pulses would have pulse duration $\Delta t_{2\omega,\mathrm{BL}}$ not less than 1.9 times shorter than $\Delta t_{\omega,\mathrm{BL}}$. In other real-

isations of this invention, SHG efficiency not less than 50% is ensured. This still may ensure generation of sub-100mJ ultrashort light pulses with pulse duration less than 10 picoseconds in a rather simple, compact and cost-effective optical setup.

## Claims

1. Method for generation of ultrashort light pulses comprising the steps of:

   a) generating a first-harmonic laser beam (3) of chirped pulses defined by a first central frequency $\omega_1$ and pulse duration $\Delta t_{\omega,\text{chirped}}$;
   b) amplifying said first-harmonic laser beam (3) of chirped pulses, thus providing amplified first-harmonic laser beam (5) of chirped pulses defined by the first central frequency $\omega_1$ and spectral width $\Delta\omega_1$; duration of chirped pulses of the laser beam (5) is longer than a bandwidth-limited duration $\Delta t_{\omega,\text{BL}}$;
   c) generating a second-harmonic laser beam (7) of chirped pulses by the means of second harmonic generation in a quadratic nonlinear medium (6), wherein said laser beam (7) is defined by a second central frequency $\omega_2=2\omega_1$, spectral width $\Delta\omega_2$ and pulse duration $\Delta t_{2\omega,\text{chirped}}$;
   d) compressing pulses of said second-harmonic laser beam (7) of chirped pulses, thus forming an output laser beam (9) of ultrashort light pulses with pulse duration $\Delta t_{2\omega}$ shorter than said bandwidth-limited pulse duration $\Delta t_{\omega,\text{BL}}$ of the amplified first-harmonic laser beam (5),

   - in the step (a), the first-harmonic laser beam (3) of chirped pulses is formed from an initial laser beam (1) by the means of pulse stretching; a spectral width $\Delta\omega_{\text{IN}}$ of said initial laser beam (1) corresponds to a bandwidth-limited pulse duration equal to a few picoseconds;
   - the duration $\Delta t_{\omega,\text{chirped}}$ of chirped pulses of the first-harmonic laser beam (3) formed in the step (a) is at least 10 times longer than its bandwidth-limited pulse duration $\Delta t_{\text{w.BL}}$, **characterized in that**
   - an amplification factor of a quantum amplifier (4) for carrying out the step (b) is selected so that, in combination with other optical parameters of steps being performed in this method for generation of ultrashort light pulses, ensures energy conversion efficiency to second-harmonic radiation in the step (c) not lower than 70% in order to attain the spectral width $\Delta\omega_2$ at least 1.7 times broader than the spectral width $\Delta\omega_1$ and said pulse duration $\Delta t_{2\omega}$ by not less than 1.7 times shorter than said pulse duration $\Delta t_{\omega,\text{BL}}$,
   - whereas the ultrashort light pulses in the output laser beam (9) are high energy light pulses having an energy from 1mJ to hundreds of mJ.

2. Method according to claim 1, **characterised in that** a central wavelength of said initial laser beam (1) is within a range from 1020nm to 1080nm.

3. Method according to any one of the preceding claims, **characterised in that** the ultrashort light pulses of said output laser beam (9) are bandwidth-limited.

4. Method according to any one of the preceding claims, **characterised in that** in a spectral range near said frequency $\omega_1$, a spectral acceptance of said quadratic nonlinear medium (6) for second harmonic generation is broader than the spectral width $\Delta\omega_1$ of said amplified first-harmonic laser beam (5) incident to the quadratic nonlinear medium (6).

5. Laser source for generation of ultrashort light pulses comprising sequentially connected:

   - a seed laser generating a first-harmonic laser beam (3) of chirped pulses defined by a first central frequency $\omega_1$ and pulse duration $\Delta t_{\omega,\text{chirped}}$;
   - a quantum amplifier (4) amplifying said first-harmonic laser beam (3) of chirped pulses, thus providing amplified first-harmonic laser beam (5) of chirped pulses defined by the first central frequency $\omega_1$ and spectral width $\Delta\omega_1$; duration of chirped pulses of the laser beam (5) is longer than a bandwidth-limited duration $\Delta t_{\omega,\text{BL}}$;
   - a quadratic nonlinear medium (6) performing second harmonic generation, thus providing a second-harmonic laser beam (7) of chirped pulses, defined by a second central frequency $\omega_2=2\omega_1$, spectral width $\Delta\omega_2$ and pulse duration $\Delta t_{2\omega,\text{chirped}}$;
   - a pulse compressor (8) compressing pulses of said second-harmonic laser beam (7) of chirped pulses, thus forming an output laser beam (9) of ultrashort light pulses with pulse duration $\Delta t_{2\omega}$ shorter than said bandwidth-limited pulse duration $\Delta t_{\omega,\text{BL}}$ of the amplified first-harmonic laser beam (5),
   - the seed laser comprises a pulse stretcher (2) which forms the first-harmonic laser beam (3) of chirped pulses from an initial laser beam (1) defined by a spectral width $\Delta\omega_{\text{IN}}$ which corresponds to a bandwidth-limited pulse duration equal to a few picoseconds,
   - said duration $\Delta t_{\omega,\text{chirped}}$ of chirped pulses of the first-harmonic laser beam (3) is at least 10 times longer than its bandwidth-limited pulse duration $\Delta t_{w,BL}$,

**characterized in that**

- an amplification factor of said quantum amplifier (4) is selected so that, in combination with other optical parameters of components constituting this laser source of ultrashort light pulses, ensures second harmonic generation efficiency not lower than 70% in order to attain the spectral width $\Delta\omega_2$ at least 1.7 times broader than the spectral width $\Delta\omega_1$ and said pulse duration $\Delta t_{2\omega}$ by not less than 1.7 times shorter than said pulse duration $\Delta t_{\omega,BL}$,

- whereas the ultrashort light pulses in the output laser beam (9) are high energy light pulses having an energy from 1mJ to hundreds of mJ.

6. Laser source according to claim 5, **characterised in that** said quantum amplifier (4) is a laser amplifier based on a solid-state Nd-doped active medium.

7. Laser source according to claim 6, **characterised in that** said solid-state Nd-doped active medium is one of or a combination of Nd:YAG, Nd:YVO$_4$, Nd:YLF, Nd:GdVO$_4$ or Nd:KGW.

8. Laser source according to claim 5, **characterised in that** said quantum amplifier (4) is a laser amplifier based on a solid-state Yb-doped active medium.

9. Laser source according to any one of claims 5-8, **characterised in that** said quantum amplifier (4) is a regenerative laser amplifier, an amplification factor of which is not less than 10$^6$.

10. Laser source according to any one of claims 5-9, **characterised in that** said quadratic nonlinear medium (6) is any one from the following list of second harmonic generation crystals: BBO, LBO, LiNbO$_3$, KTP, KDP, DKDP, ADP, PPLN, PPKTP or a combination of the listed materials.

11. Optical parametric chirped pulse amplification (OPCPA) system, in its pump branch employing the laser source according to any of claims 5-10 and implementing the method for generation of ultrashort light pulses according to any of claims 1-4.

**Patentansprüche**

1. Verfahren zur Erzeugung von ultrakurzen Lichtpulsen umfassend die folgenden Schritte:

a) Erzeugung einer ersten Harmonischen (3) von gechirpten Pulsen, definiert durch eine erste Mittenfrequenz $\omega_1$ und Pulsdauer $\Delta t_{\omega,chirped}$;
b) Verstärkung der ersten Harmonischen (3) von gechirpten Pulsen, wodurch eine verstärkte erste Harmonische (5) von gechirpten Pulsen erzeugt wird, definiert durch die erste Mittenfrequenz $\omega_1$ und Spektralbreite $\Delta\omega_1$, und die Dauer der gechirpten Pulse des Laserstrahls (5) länger ist als die bandbreitenbegrenzte Dauer $\Delta t_{\omega,BL}$;
c) Erzeugung einer zweiten Harmonischen (7) von gechirpten Pulsen mittels Erzeugung der zweiten Harmonischen in einem quadratischen nichtlinearen Medium (6), wobei der Laserstrahl (7) durch eine zweite Mittenfrequenz $\omega_2=2\omega_1$, Spektralbreite $\Delta\omega_2$ und Pulsdauer $\Delta t_{2\omega,chirped}$ definiert ist;
d) Komprimieren von Pulsen der zweiten Harmonischen (7) von gechirpten Pulsen, wodurch ein Ausgabelaserstrahl (9) von ultrakurzen Lichtpulsen gebildet wird, bei denen die Pulsdauer $\Delta t_{2\omega}$ kürzer ist als die bandbreitenbegrenzte Pulsdauer $\Delta t_{\omega,BL}$ der verstärkten ersten Harmonischen (5),

- im Schritt (a) die erste Harmonische (3) von gechirpten Pulsen durch einen initialen Laserstrahl (1) mittels Pulsstreckung gebildet wird; eine Spektralbreite $\Delta\omega_{IN}$ des initialen Laserstrahls (1) einer bandbreitenbegrenzten Pulsdauer von wenigen Pikosekunden entspricht;
- die Dauer $\Delta t_{\omega,chirped}$ der gechirpten Pulse der im Schritt (a) gebildeten ersten Harmonischen (3) mindestens 10 Mal länger ist als ihre bandbreitenbegrenzte Pulsdauer $\Delta t_{\omega,BL}$,

**dadurch gekennzeichnet, dass**

- ein Verstärkungsfaktor eines Quantenverstärkers (4) zur Ausführung des Schrittes (b) so gewählt wird, dass in Kombination mit anderen optischen Parametern zur Ausführung von Schritten zur Erzeugung von ultrakurzen Lichtpulsen in diesem Verfahren gewährleistet ist, dass der Wirkungsgrad der Strahlung der zweiten Harmonischen in Schritt (c) nicht weniger als 70% beträgt, um eine Spektralbreite $\Delta\omega_2$ zu erhalten, die mindestens 1,7 Mal breiter ist als die Spektralbreite $\Delta\omega_1$ und die Pulsdauer $\Delta t2_\omega$ nicht weniger als 1,7 Mal kürzer ist als die Pulsdauer $\Delta t_{\omega,BL}$,
- wohingegen die ultrakurzen Lichtpulse im Ausgabelaserstrahl (9) hochenergetische Lichtpulse mit einer Energie von 1mJ bis zu Hunderten von mJ sind.

2. Verfahren nach Anspruch 1, **dadurch gekennzeichnet, dass** eine Zentralwellenlänge des Ausgangslaserstrahls (1) in einem Bereich von 1020nm bis 1080nm liegt.

3. Verfahren nach einem der vorhergehenden Ansprüche, **dadurch gekennzeichnet, dass** die ultrakurzen Lichtpulse des Ausgabelaserstrahls (9) bandbreitenbegrenzt sind.

4. Verfahren nach einem der vorhergehenden Ansprüche, **dadurch gekennzeichnet, dass** in einem Spektralbereich nahe der Frequenz $\omega_1$ eine spektrale Akzeptanz des quadratischen nichtlinearen Mediums (6) zur Erzeugung der zweiten Harmonischen breiter ist als die Spektralbreite $\Delta\omega_1$ der auf das quadratische nichtlineare Medium (6) einfallenden verstärkten ersten Harmonischen (5).

5. Laserquelle zur Erzeugung von ultrakurzen Lichtpulsen, das Folgende hintereinander geschaltet umfassend:

   - ein Seedlaser, der eine erste Harmonische (3) von gechirpten Pulsen erzeugt, definiert durch eine erste Mittenfrequenz $\omega_1$ und Pulsdauer $\Delta t_{\omega,chirped}$;
   - ein Quantenverstärker (4), der die erste Harmonische (3) von gechirpten Pulsen verstärkt, wodurch eine verstärkte erste Harmonische (5) von gechirpten Pulsen erzeugt wird, definiert durch die erste Mittenfrequenz $\omega_1$ und Spektralbreite $\Delta\omega_1$ und die Dauer der gechirpten Pulse des Laserstrahls (5) länger ist als die bandbreitenbegrenzte Dauer $\Delta t_{\omega,BL}$;
   - ein quadratisches nichtlineares Medium (6), das die zweite Harmonische erzeugt, wodurch eine zweite Harmonische (7) von gechirpten Pulsen erzeugt wird, die durch eine zweite Mittenfrequenz $\omega_2=2\omega_1$, Spektralbreite $\Delta\omega_2$ und Pulsdauer $\Delta t_{2\omega,chirped}$ definiert ist;
   - ein Pulskompressor (8), der Pulse der zweiten Harmonischen (7) von gechirpten Pulsen komprimiert, wodurch ein Ausgabelaserstrahl (9) von ultrakurzen Lichtpulsen gebildet wird, bei denen die Pulsdauer $\Delta t_{2\omega}$ kürzer ist als die bandbreitenbegrenzte Pulsdauer $\Delta t_{\omega,BL}$ der verstärkten ersten Harmonischen (5),
   - der Seedlaser einen Pulsstrecker (2) umfasst, der eine erste Harmonische (3) von gechirpten Pulsen aus einem initialen Laserstrahl (1) bildet, definiert durch eine Spektralbreite $\Delta\omega_{IN}$, die einer bandbreitenbegrenzten Pulsdauer von wenigen Pikosekunden entspricht,
   - die Dauer $\Delta t_{\omega,chirped}$ der gechirpten Pulse der ersten Harmonischen (3) mindestens 10 Mal länger ist als ihre bandbreitenbegrenzte Pulsdauer $\Delta t_{\omega,BL}$,

**dadurch gekennzeichnet, dass**
   - ein Verstärkungsfaktor des Quantenverstärkers (4) so gewählt wird, dass in Kombination mit anderen optischen Parametern der die Laserquelle ultrakurzer Lichtpulse bildenden Bestandteile gewährleistet ist, dass der Wirkungsgrad der Erzeugung der zweiten Harmonischen nicht weniger als 70% beträgt, um eine Spektralbreite $\Delta\omega_2$ zu erhalten, die mindestens 1,7 Mal breiter ist als die Spektralbreite $\Delta\omega_1$ und die Pulsdauer $\Delta t_{2\omega}$ nicht weniger als 1,7 Mal kürzer ist als die Pulsdauer $\Delta t_{\omega,BL}$,
   - wohingegen die ultrakurzen Lichtpulse im Ausgabelaserstrahl (9) hochenergetische Lichtpulse mit einer Energie von 1mJ bis zu Hunderten von mJ sind.

6. Laserquelle nach Anspruch 5, **dadurch gekennzeichnet, dass** der Quantenverstärker (4) ein Laserverstärker auf Basis eines Festkörper-Nddotierten aktiven Mediums ist.

7. Laserquelle nach Anspruch 6, **dadurch gekennzeichnet, dass** das Festkörper-Nd-dotierte aktive Medium eines von oder eine Kombination aus Nd:YAG, Nd:YVO$_4$, Nd:YLF, Nd:GdVO$_4$ oder Nd:KGW ist.

8. Laserquelle nach Anspruch 5, **dadurch gekennzeichnet, dass** der Quantenverstärker (4) ein Laserverstärker auf Basis eines Festkörper-Ybdotierten aktiven Mediums ist.

9. Laserquelle nach einem der Ansprüche 5-8, **dadurch gekennzeichnet, dass** der Quantenverstärker (4) ein regenerativer Laserverstärker ist, dessen Verstärkungsfaktor nicht weniger als $10^6$ beträgt.

10. Laserquelle nach einem der Ansprüche 5-9, **dadurch gekennzeichnet, dass** das quadratische nichtlineare Medium (6) einer der folgenden Kristalle zur Erzeugung einer zweiten Harmonischen ist: BBO, LBO, LiNbO$_3$, KTP, KDP, DKDP, ADP, PPLN, PPKTP oder eine Kombination aus den aufgelisteten Materialien.

11. System zur optisch parametrischen Verstärkung mit gestreckten Pulsen (OPCPA), das in seinem Pumpzweig die Laserquelle nach einem der Ansprüche 5-10 verwendet und das Verfahren zur Erzeugung ultrakurzer Lichtpulse nach einem der Ansprüche 1-4 ausführt.

**Revendications**

1. Procédé pour la génération d'impulsions lumineuses ultracourtes, comprenant les étapes consistant à :

a) générer un faisceau laser de première harmonique (3) d'impulsions à dérive de fréquence définies par une première fréquence centrale $\omega_1$ et une durée d'impulsion $\Delta t_{\omega,\text{chirped}}$ ;

b) amplifier ledit faisceau laser de première harmonique (3) d'impulsions à dérive de fréquence, ce qui donne ainsi un faisceau laser de première harmonique amplifié (5) d'impulsions à dérive de fréquence définies par la première fréquence centrale $\omega_1$ et une largeur spectrale $\Delta\omega_1$ ; la durée des impulsions à dérive de fréquence du faisceau laser (5) étant plus longue qu'une durée limitée en bande passante $\Delta t_{\omega,\text{BL}}$ ;

c) générer un faisceau laser de deuxième harmonique (7) d'impulsions à dérive de fréquence par la génération d'une deuxième harmonique dans un milieu non linéaire quadratique (6), ledit faisceau laser (7) étant défini par des deuxièmes fréquence centrale $\omega_2 = 2\omega_1$, largeur spectrale $\Delta\omega_2$ et durée d'impulsion $\Delta t_{2\omega,\text{chirped}}$ ;

d) compresser les impulsions dudit faisceau laser de deuxième harmonique (7) d'impulsions à dérive de fréquence, ce qui forme ainsi un faisceau laser de sortie (9) d'impulsions lumineuses ultracourtes ayant une durée d'impulsion $\Delta t_{2\omega}$ plus courte que ladite durée d'impulsion limitée en bande passante $\Delta t_{\omega,\text{BL}}$ du faisceau laser de première harmonique amplifié (5),

    - dans l'étape (a), le faisceau laser de première harmonique (3) d'impulsions à dérive de fréquence est formé à partir d'un faisceau laser initial (1) au moyen d'un étirement d'impulsions ; la largeur spectrale $\Delta\omega_{\text{IN}}$ dudit faisceau laser initial (1) correspond à une durée d'impulsion limitée en bande passante égale à quelques picosecondes ;

    - la durée $\Delta t_{\omega,\text{chirped}}$ des impulsions à dérive de fréquence du faisceau laser de première harmonique (3) formé dans l'étape (a) est plus longue d'au moins 10 fois que sa durée d'impulsion limitée en bande passante $\Delta t_{\omega,\text{BL}}$,

    **caractérisé en ce que**

    - un facteur d'amplification d'un amplificateur quantique (4) pour la mise en œuvre de l'étape (b) est choisi de façon, en combinaison avec d'autres paramètres optiques d'étapes réalisées dans ce procédé pour la génération d'impulsions lumineuses ultracourtes, à assurer un rendement de conversion énergétique en rayonnement de deuxième harmonique dans l'étape (c) non inférieur à 70 % afin que soit atteinte la largeur spectrale $\Delta\omega_2$ au moins 1,7 fois plus large que la largeur spectrale $\Delta\omega_1$ et ladite durée d'impulsion $\Delta t_{2\omega}$ plus courte d'au moins 1,7 fois ladite durée d'impulsion $\Delta t_{\omega,\text{BL}}$,

    - tandis que les impulsions lumineuses ultracourtes dans le faisceau laser de sortie (9) sont des impulsions lumineuses de forte énergie ayant une énergie de 1 mJ à plusieurs centaines de mJ.

**2.** Procédé selon la revendication 1, **caractérisé en ce que** une longueur d'onde centrale dudit faisceau laser initial (1) est située dans la plage allant de 1020 nm à 1080 nm.

**3.** Procédé selon l'une quelconque des revendications précédentes, **caractérisé en ce que** les impulsions lumineuses ultracourtes dudit faisceau laser de sortie (9) sont limitées en bande passante.

**4.** Procédé selon l'une quelconque des revendications précédentes, **caractérisé en ce que**, dans une plage spectrale proche de ladite fréquence $\omega_1$, l'acceptation spectrale dudit milieu non linéaire quadratique (6) pour la génération de deuxième harmonique est plus large que la largeur spectrale $\Delta\omega_1$ dudit faisceau laser de première harmonique amplifié (5) incident au milieu non linéaire quadratique (6).

**5.** Source de laser pour la génération d'impulsions lumineuses ultracourtes comprenant, connectés en séquence :

    - un laser d'ensemencement générant un faisceau laser de première harmonique (3) d'impulsions à dérive de fréquence définies par une première fréquence centrale $\omega_1$ et une durée d'impulsion $\Delta t_{\omega,\text{chirped}}$ ;

    - un amplificateur quantique (4) amplifiant ledit faisceau laser de première harmonique (3) d'impulsions à dérive de fréquence, en fournissant ainsi un faisceau laser de première harmonique amplifié (5) d'impulsions à dérive de fréquence définies par la première fréquence centrale $\omega_1$ et une largeur spectrale $\Delta\omega_1$ ; la durée des impulsions à dérive de fréquence du faisceau laser (5) étant plus longue qu'une durée limitée en bande passante $\Delta t_{\omega,\text{BL}}$ ;

    - un milieu non linéaire quadratique (6) réalisant une génération de deuxième harmonique, en fournissant ainsi un faisceau laser de deuxième harmonique (7) d'impulsions à dérive de fréquence, défini par des deuxièmes fréquence centrale $\omega_2 = 2\omega_1$, largeur spectrale $\Delta\omega_2$ et durée d'impulsion $\Delta t_{2\omega,\text{chirped}}$ ;

    - un compresseur d'impulsions (8) compressant les impulsions dudit faisceau laser de deuxième harmonique (7) d'impulsions à dérive de fréquence, en formant ainsi un faisceau laser de sortie (9) d'impulsions lumineuses ultracourtes ayant une durée d'impulsion $\Delta t_{2\omega}$ plus courte que ladite durée d'impulsion limitée en bande passante $\Delta t_{\omega,BL}$ du faisceau laser de première harmonique amplifié (5),

- le laser d'ensemencement comprend un étireur d'impulsion (2) qui forme le faisceau laser de première harmonique (3) d'impulsions à dérive de fréquence à partir d'un faisceau laser initial (1) défini par une largeur spectrale $\Delta\omega_{IN}$ qui correspond à une durée d'impulsion limitée en bande passante égale à quelques picosecondes,

- ladite durée $\Delta t_{\omega,chirped}$ des impulsions à dérive de fréquence du faisceau laser de première harmonique (3) étant plus longue d'au moins 10 fois que sa durée d'impulsion limitée en bande passante $\Delta t_{\omega,BL}$,

**caractérisée en ce que**

- un facteur d'amplification dudit amplificateur quantique (4) est choisi de façon, en combinaison avec d'autres paramètres optiques de composants constituant cette source de laser d'impulsions lumineuses ultracourtes, à assurer un rendement de génération de deuxième harmonique non inférieur à 70 % afin que soit atteinte la largeur spectrale $\Delta\omega_2$ au moins 1,7 fois plus large que la largeur spectrale $\Delta\omega_1$ et ladite durée d'impulsion $\Delta t_{2\omega}$ plus courte d'au moins 1,7 fois ladite durée d'impulsion $\Delta t_{\omega,BL}$,

- tandis que les impulsions lumineuses ultracourtes dans le faisceau laser de sortie (9) sont des impulsions lumineuses de forte énergie ayant une énergie de 1 mJ à plusieurs centaines de mJ.

6. Source de laser selon la revendication 5, **caractérisée en ce que** ledit amplificateur quantique (4) est un amplificateur de laser à base d'un milieu actif solide dopé au Nd.

7. Source de laser selon la revendication 6, **caractérisée en ce que** ledit milieu actif solide dopé au Nd est l'un ou une combinaison de Nd:YAG, Nd:YVO$_4$, Nd:YLF, Nd:GdVO$_4$ et Nd:KGW.

8. Source de laser selon la revendication 5, **caractérisée en ce que** ledit amplificateur quantique (4) est un amplificateur de laser à base d'un milieu actif solide dopé au Yb.

9. Source de laser selon l'une quelconque des revendications 5 à 8, **caractérisée en ce que** ledit amplificateur quantique (4) est un amplificateur de laser régénératif, dont le facteur d'amplification n'est pas inférieur à $10^6$.

10. Source de laser selon l'une quelconque des revendications 5 à 9, **caractérisée en ce que** ledit milieu non linéaire quadratique (6) est l'un quelconque dans la liste suivante de cristaux de génération de deuxième harmonique: BBO, LBO, LiNbO$_3$, KTP, KDP, DKDP, ADP, PPLN, PPKTP ou une combinaison des matériaux listés.

11. Système d'amplification paramétrique optique d'impulsions à dérive de fréquence (OPCPA), employant dans sa ramification de pompe la source de laser de l'une quelconque des revendications 5 à 10 et mettant en œuvre le procédé de génération d'impulsions lumineuses ultracourtes de l'une quelconque des revendications 1 à 4.

**Fig.1**

**Fig.2**

3/7

# Fig.3

# Fig.4

**Fig.5**

$$\omega_2(t1) = 2\omega_1(t1)$$

$$\omega_2(t2) = 2\omega_1(t2)$$

Fig.6

**Fig.7**

**Fig.8**

**Fig.9**

**Fig.10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14177007
- EP 2827461 A
- EP 15159873
- EP 2924500 A
- US 2013182724 A, Imeshev
- WO 2393601 A
- RU 2393601
- US 7733922 B
- US 8068522 B, Barty

**Non-patent literature cited in the description**

- **J.ADAMONIS et al.** High-energy Nd:YAG-amplification system for OPCPA pumping. *Quantum Electronics,* 2012, vol. 42 (7), 567
- **K.MICHAILOVAS et al.** Kilohertz rate picosecond pulses amplifier for pumping of OPCPA system. *Lasers, Sources, and Related Photonic Devices, Paper AW4A3, OSA,* 2012
- **Y.WANG et al.** Frequency-doubling pulse compressor for picosecond high-power neodymium laser pulses. *Optics Letters,* 1992, vol. 17 (20), 1459
- **A.UMBRASAS et al.** Generation of femtosecond pulses through second-harmonic compression of the output of a Nd:YAG laser. *Optics Letters,* 1995, vol. 20 (21), 2228
- **M.AOYAMA et al.** Efficient noncollinear second-harmonic generation with proper frequency chirp and tilted pulse fronts of femtosecond laser pulses. *Jap. J. Appl. Physics,* 2000, vol. 39 (5A), 2651
- **O.GOBERT et al.** Efficient broadband 400 nm noncollinear second-harmonic generation of chirped femtosecond laser pulses in BBO and LBO. *Applied Optics,* 2014, vol. 53 (12), 2646
- **N.V.DIDENKO et al.** Femtosecond pulse compression based on second harmonic generation from a frequency chirped pulse. *Optics Communications,* 2009, vol. 282, 997-999
- **A.V. KONYASHCHENKO et al.** 16fs green pulses from two-stage nonlinear compression of 300fs ytterbium laser pulses. *15th International Conference on Laser Optics, LO-2012,* 25 June 2012
- **M.Y.SHVERDIN et al.** Chirped-pulse amplification with narrowband pulses. *Opt. Lett.,* 2010, vol. 35, 2478